# EUROPÄISCHE PATENTSCHRIFT

(11) **EP 0 445 720 B1**
(45) Veröffentlichungstag und Bekanntmachung des Hinweises auf die Patenterteilung: **08.05.1996**
(21) Anmeldenummer: 91103293.6
(22) Anmeldetag: 05.03.1991
(51) Int. Cl.: G02F 1/163

(54) **Verfahren und Anordnung zum Anlegen einer elektrischen Betriebsspannung an ein elektrooptisches Schichtsystem**
Method and arrangement for supplying a system of electro-optic layers with an operating voltage
Procédé et assemblage pour fournir une tension d'alimentation à un système de couches électro-optiques

(30) Priorität: 06.03.1990 DE 4006947
(43) Veröffentlichungstag der Anmeldung: 11.09.1991
(73) Patentinhaber: Bayerische Motoren Werke Aktiengesellschaft, D-80788 München (DE)
(72) Erfinder: Kapfhammer, Karl, W-8034 Germering (DE)

(56) Entgegenhaltungen:
- EP-A- 0 408 427
- GB-A- 2 038 065
- US-A- 4 175 836
- US-A- 4 205 903
- US-A- 4 246 579
- PATENT ABSTRACTS OF JAPAN vol. 12, no. 456 (P-793)(3303) 30: November 1988 & JP-A-63 179 335

## Beschreibung

Die Erfindung bezieht sich auf eine im Oberbegriff des Patentanspruchs 1 definierte Anordnung und auf ein im Oberbegriff des Patentanspruchs 4 definiertes Verfahren.

Derartige Anordnungen bzw. Verfahren sind aus der nicht vorveröffentlichten europäischen Patentanmeldung EP-A 0 408 427 bekannt. Daraus geht ein Verfahren zum Steuern der elektrischen Betriebsspannung eines elektrooptischen Schichtsystems hervor, das einer vorprogrammierten Kurve über der Zeit folgt. Damit wird die zwischen den beiden Leitschichten anliegende Potentialdifferenz konstant gehalten. Die Konstanthaltung eines Wertes, hier der Potentialdifferenz beinhaltet nicht nur dessen Limitierung hinsichtlich eines Grenzwertes, sondern sorgt auch dafür, daß die innere Potentialdifferenz nahe an einem solchen Grenzwert verläuft. Aufgrund der unvermeidbaren ohmschen Widerstände und Kapazitäten der Schichtanordnung kann die äußere Betriebsspannung zu Beginn eines Schaltvorgangs durchaus einen Wert über diesem Grenzwert annehmen.

Aus der US-A 4 205 903 ist ein Steuerungssystem bekannt, bei dem eine dritte (Referenz-) Elektrode zur Messung der inneren Potentialdifferenz und ein Regelkreis für deren Konstanthaltung benutzt wird. Zwar ist die Limitierung der inneren Potentialdifferenz unterhalb eines oberen Grenzwertes nicht explizit genannt, doch ergibt sich diese Eigenschaft implizit. Damit entsprechen die aus der EP-A 0 408 427 und der US-A 4 205 903 bekannten Anordnungen und Verfahren den im Oberbegriff der Patentansprüche 1 und 4 genannten.

Es ist Aufgabe der Erfindung, die erfindungsgemäße Anordnung bzw. das erfindungsgemäße Verfahren weiter zu verbessern.

Diese Aufgabe wird für die Anordnung durch die kennzeichnenden Merkmale des Patentanspruchs 1 und für das Verfahren durch die kennzeichnenden Merkmale des Patentanspruchs 4 gelöst.

Durch die Hinzunahme eines vierten Anschlusses zum Messen einer weiteren inneren Potentialdifferenz ist die Sicherheit erhöht. Die äußere Potentialdifferenz läßt sich in Abhängigkeit von den erfaßten Werten so regeln, daß keine der inneren Potentialdifferenzen den Grenzwert übersteigt.

Weitere vorteilhafte Ausgestaltungen des erfindungsgemäßen Verfahrens sind in den Patentansprüchen 2 und 3 beschrieben.

Damit wird eine möglichst rasche Zustandsänderung der elektrooptischen Schichten erreicht, wenn die äußere Potentialdifferenz so geregelt oder gesteuert ist, daß die innere Potentialdifferenz bzw. die inneren Potentialdifferenzen möglichst nahe am Grenzwert verlaufen. Eine anfängliche äußere Spannungsüberhöhung beschleunigt jedoch in jedem Fall den (Ent-)Ladevorgang der elektrooptischen Schicht, auch wenn der zulässige Grenzwert für die (innere) Potentialdifferenz nicht zur Gänze ausgenutzt wird. Für manche Anwendungen kann eine Änderungsgeschwindigkeit genügen, die zwischen derjenigen eines statischen Betriebs (äußere Potentialdifferenz = Grenzwert) und der maximalen Geschwindigkeit (innere Potentialdifferenz = Grenzwert) liegt. Wo eine solche Zwischenlösung genügt, kann man am Aufwand für die Erzeugung einer maximal überhöhten äußeren Potentialdifferenz sparen.

Anhand von in der Zeichnung dargestellten Ausführungsbeispielen wird die Erfindung nachstehend näher erläutert. Es zeigt
- Fig. 1: einen schematischen Schnitt durch eine erfindungsgemäße Zelle mit einem elektrooptischen Schichtsystem;
- Fig. 2: ein Diagramm des räumlichen Potentialverlaufs an den Leitschichten eines elektrooptischen Schichtsystems bei Vorliegen eines Anfangsladestroms;
- Fig. 3: ein Diagramm des räumlichen Potentialverlaufs an den Leitschichten eines elektrooptischen Schichtsystems bei abgeklungenem Ladestrom;
- Fig. 4: ein Diagramm des zeitlichen Verlaufs der äußeren Potentialdifferenz zwischen den Versorgungsanschlüssen der Leitschichten bei erfindungsgemäßer Betriebsweise;
- Fig. 5: eine erste Spannungsversorgungseinrichtung zur Erzeugung einer erfindungsgemäßen äußeren Potentialdifferenz; und
- Fig. 6: eine zweite Spannungsversorgungseinrichtung zur Erzeugung einer erfindungsgemäßen äußeren Potentialdifferenz;

Der schematische Schnitt gemäß Fig.l zeigt exemplarisch eine Zelle oder Scheibe mit einem elektrochromen Schichtsystem S (WO₃ - Elektrolyt - Rückelektrode) zwischen zwei Glasplatten G1, G2. Auf einer ersten (in der Figur oberen) Oberfläche des elektrooptischen Schichtsystems S ist eine erste elektrisch leitfähige, linien- oder flächenhafte Leitschicht L1 (z.B. aus Indium-Zinn-Oxid) aufgebracht, und auf einer zweiten (in der Figur unteren) Oberfläche des elektrooptischen Schichtsystems S ist eine zweite elektrisch leitfähige, linien- oder flächenhafte Leitschicht L2 aufgebracht. An die erste Leitschicht L1 kann über einen ersten Anschluß A ein elektrisches Potential gelegt werden, und an die zweite Leitschicht L2 kann über einen zweiten Anschluß B ein elektrisches Potential gelegt werden, wobei der erste (A) und der zweite (B) Anschluß auf entgegengesetzten Seiten einer zum elektrooptischen Schichtsystem S senkrechten, gedachten Bezugsebene E angeordnet sind, vorzugsweise an entgegengesetzten Kanten der Anordnung und vorzugsweise derart, daß durch Anlegen einer äußeren Potentialdifferenz δPa zwischen dem ersten (A) und dem zweiten (B) Anschluß gestrichelt gezeichnete, durch die Bezugsebene E hindurchtretende Strompfade gleicher Länge ausbildbar sind.

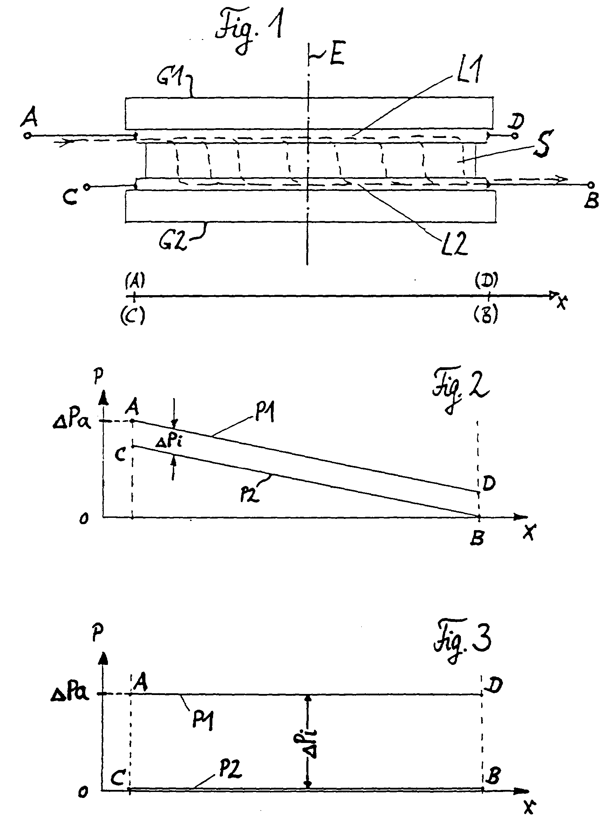

Die Anordnung nach Fig.1 weist ferner einen dritten Anschluß C zum Erfassen eines elektrischen Meßpotentials der zweiten Leitschicht L2 auf, wobei der dritte Anschluß C auf derselben Seite der Bezugsebene E liegt wie der erste Anschluß A. Schließlich weist die Anordnung nach Fig.1 noch einen vierten Anschluß D zum Erfassen eines elektrischen Meßpotentials der ersten Leitschicht L1 auf, wobei der vierte Anschluß D auf derselben Seite der Bezugsebene E liegt wie der zweite Anschluß B. In Fig.1 ist unterhalb des Schnittbilds der Anordnung eine Koordinatenachse x eingezeichnet, auf die nachfolgend bei der Beschreibung der räumlichen Potentialverläufe an den Leitschichten L1, L2 Bezug genommen wird.

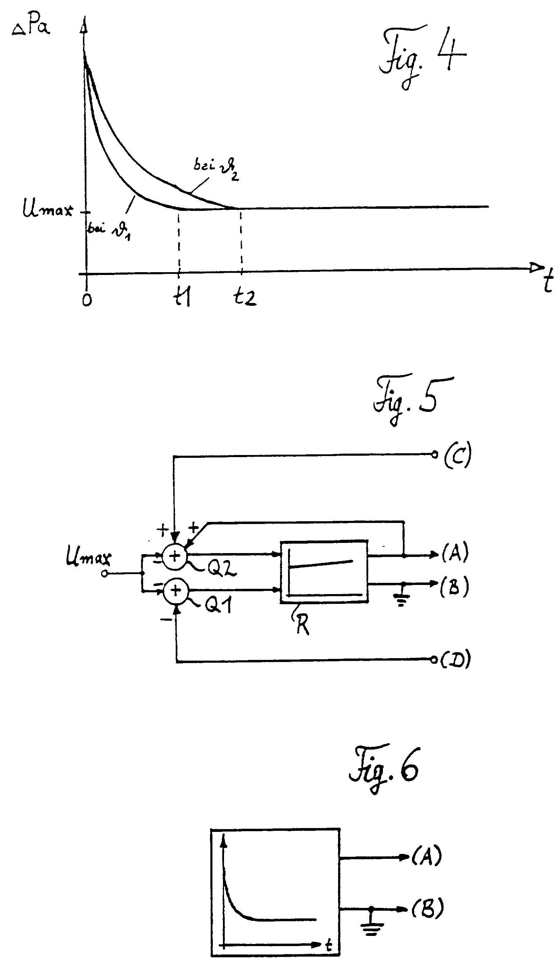

Wird eine äußere Potentialdifferenz δPa zwischen dem ersten Anschluß A der ersten Leitschicht L1 und dem zweiten Anschluß B der zweiten Leitschicht L2 angelegt, so kommt es in der oben erläuterten Weise zu einem Lade- bzw. Entladestrom, der auf seinem Weg durch die widerstandsbehafteten dünnen Leitschichten L1, L2 einen von der Länge des Wegs abhängigen Spannungsabfall hervorruft. Ein Anfangs(ent)ladestrom, der zu Beginn des Anlegens der äußeren Potentialdifferenz δPa fließt, führt deshalb zu dem in Fig.2 als geneigte Gerade P1 über der x-Achse aufgetragenen räumlichen Potentialverlauf an der Leitschicht L1, wobei hier das Potential am Anschluß B als Null definiert ist. Gleichzeitig ergibt der Anfangs(ent)ladestrom den als geneigte Gerade P2 über der x-Achse aufgetragenen räumlichen Potentialverlauf an der Leitschicht L2. Die Differenz zwischen den Potentialen P1 und P2 an einer Koordinate x ist die dort bestehende innere Potentialdifferenz δPi, die an dieser Stelle tatsächlich zwischen zwei gegenüberliegenden Punkten der Leitschichten L1, L2 herrscht und auf das elektrooptische Schichtsystem S einwirkt.

Wie aus Fig.2 ersichtlich, ist während eines Ladestromflusses die innere Potentialdifferenz δPi infolge der Spannungsabfälle in den Leitschichten L1, L2 erheblich geringer als die äußere Potentialdifferenz δPa. Also gelangt, wenn die äußere Potentialdifferenz δPa nur so groß wie der Grenzwert Umax der inneren Potentialdifferenz δPi gewählt wird, ein unnötig und unerwünscht kleiner Spannungswert an das elektrooptische Schichtsystem S. Wählt man nun aber die äußere Potentialdifferenz δPa für die Dauer des Ladestromflusses um einiges höher als den Grenzwert Umax, so kann auch die an das elektrooptische Schichtsystem S gelangende Teilspannung δPi den zulässigen Rahmen, d.h. den Grenzwert Umax, noch ausschöpfen (potentiostatischer Betrieb) und damit eine möglichst schnelle (Ent)Ladung des elektrooptischen Schichtsystems S bewirken.

Nach Abklingen des (Ent)Ladestroms gibt es in den Leitschichten L1, L2 keine ins Gewicht fallenden Spannungsabfälle mehr, so daß - wie in Fig.3 gezeigt - die Potentiale P1, P2 der Leitschichten L1, L2 über der x-Achse konstant sind. Die innere Potentialdifferenz δPi unterscheidet sich dann praktisch nicht von der äußeren Potentialdifferenz δPa. In diesem statischen Zustand darf die äußere Potentialdifferenz δPa deshalb nicht mehr größer als der Grenzwert Umax sein.

Fig.4 zeigt schematisch vereinfacht 2 beispielhaft zeitliche Verläufe der äußeren Potentialdifferenz δPa, die einerseits eine schnelle (Ent)Ladung des elektrooptischen Schichtsystems S bewirken und andererseits nicht zu einer Überschreitung des Grenzwerts Umax der inneren Potentialdifferenz δPi führen. Wie ersichtlich, ist die äußere Potentialdifferenz δPa bei einer bestimmten Temperatur θ₁ für eine der (Ent)Ladedauer entsprechende Zeit t1 gegenüber dem Grenzwert Umax überhöht und wird dann auf diesen Wert zurückgeführt. Bei einer niedrigeren Temperatur θ₂ verlängert sich die Zeitdauer der (Ent)Ladung auf t2.

Fig.5 zeigt hierzu ein Schaltungsschema einer ersten Spannungsversorgungseinrichtung zur Erzeugung einer äußeren Potentialdifferenz δPa mit den geforderten Eigenschaften, nämlich stets möglichst groß, aber nie so groß zu sein, daß die innere Potentialdifferenz δPi den Grenzwert Umax übersteigen würde.

Diese Spannungsversorgungseinrirchtung arbeitet mit einem geschlossenen Regelkreis. Eine Regeleinheit R stellt an einem Ausgang eine veränderliche (Gleich-)Spannung für den Anschluß A der Leitschicht L1 bereit. Wenn der Anschluß B der Leitschicht L2 auf Nullpotential gelegt wird, stellt die Spannung am Anschluß A gleichzeitig die äußere Potentialdifferenz δPa dar. Der Istwert einer inneren Potentialdifferenz δPi kann nun z.B. als Potential am vierten Anschluß D der Anordnung nach Fig.1 gemessen und einem ersten Summierglied Q1 zugeführt werden, wo ein Vergleich mit dem Grenzwert Umax stattfindet. Eine etwaige Regelabweichung wird der Regeleinheit R zugeführt und durch diese minimiert, so daß die innere Potentialdifferenz δPi am Grenzwert Umax gehalten wird. Ferner kann eine weitere innere Potentialdifferenz δPi ermittelt werden, indem das am Anschluß C gemessene Potential mittels eines zweiten Summierglieds Q2 von dem am Anschluß A anliegenden Potential subtrahiert wird. Diese innere Potentialdifferenz δPi kann ihrerseits durch Vergleich mit dem Grenzwert Umax auf oder unter den Grenzwert Umax geregelt werden, indem die Regeleinheit R ihre Ausgangsspannung, d.h. die äußere Potentialdifferenz δPa, im Sinne der Minimierung einer Regelabweichung anpaßt. Wenn zwei innere Potentialdifferenzen δPi erfaßt werden, darf keine der beiden den Grenzwert Umax überschreiten. Bei inhomogener Potentialverteilung über der Breite x des elektrooptischen Schichtsystems S ist somit die größte gemessene innere Potentialdifferenz δPi das Regelkriterium für die Regeleinheit R. Die Regelung bringt mit ihrer Rückkopplung von Istwerten einen hohen Grad an Sicherheit gegen Überspannungen im Inneren der Anordnung.

Wenn man einen für eine schnelle (Ent)Ladung des elektrooptischen Schichtsystems S geeigneten zeitlichen und gegebenenfalls temperaturabhängigen Verlauf der äußeren Potentialdifferenz δPa kennt - etwa den in Fig.4 gezeigten - kann man auch ohne Rückkopplung von Istwerten die äußere Potentialdifferenz δPa in Abhängigkeit von der Zeit und gegebenenfalls der Temperatur so steuern, daß diese Potentialdifferenz δPa einer vorgegebenen Kurve über der Zeit folgt.

Fig.6 symbolisiert eine solche Spannungsversorgungseinrichtung zur zeitgesteuerten Erzeugung der äußeren Potentialdifferenz δPa.

Da der ideale zeitliche Verlauf der äußeren Potentialdifferenz δPa noch von einem Parameter, nämlich der Temperatur des elektrooptischen Schichtsystems S, abhängt, kann die Vorgabe einer parametrierten Kurvenschar vorgesehen werden und die passende Spannungs-Zeit-Kurve in Abhängigkeit von dem erfaßten Parameter selbsttätig ausgewählt und vorgegeben werden.

Im Fall der Zeitsteuerung entfällt die Notwendigkeit einer Rückkopplung von Istwerten der inneren Potentialdifferenz δPi, und damit braucht auch kein dritter (C) oder vierter (D) Anschluß an den Leitschichten L1, L2 vorgesehen zu werden. Es können somit auch herkömmlich ausgestattete Schichtanordnungen nach dem Verfahren einer anfangs überhöhten äußeren Potentialdifferenz δPa betrieben und schneller in den jeweils komplementären optischen Zustand überführt werden.

## Patentansprüche

1. Anordnung mit einem elektrooptischen Schichtsystem (S), insbesondere zwischen beschichteten Glasflächen (G1, G2), bei welcher Anordnung eine optische Eigenschaft des elektrooptischen Schichtsystems (S) durch Anlegen einer elektrischen Betriebsspannung änderbar ist, ferner mit einer ersten elektrisch leitfähigen Leitschicht (L1) auf einer ersten Oberfläche des elektrooptischen Schichtsystems (S) und mit einer zweiten elektrisch leitfähigen Leitschicht (L2) auf einer der ersten Oberfläche gegenüberliegenden, zweiten Oberfläche des elektrooptischen Schichtsystems (S), weiterhin mit einem ersten Anschluß (A) zum Anlegen eines ersten elektrischen Potentials an die erste Leitschicht (L1) und mit einem zweiten Anschluß (B) zum Anlegen eines zweiten elektrischen Potentials an die zweite Leitschicht (L2), wobei der erste (A) und der zweite (B) Anschluß auf entgegengesetzten Seiten einer zum elektrooptischen Schichtsystem (S) senkrechten Bezugsebene (E) angeordnet sind, derart, daß durch Anlegen einer äußeren Potentialdifferenz (δPa) zwischen dem ersten (A) und dem zweiten (B) Anschluß Strompfade gleicher Länge quer zu den Leitschichten (L1, L2) ausbildbar sind, und mit einem dritten Anschluß (C) zum Erfassen eines elektrischen Meßpotentials der zweiten Leitschicht (L2), wobei der dritte Anschluß (C) auf derselben Seite der Bezugsebene (E) liegt wie der erste Anschluß (A), gekennzeichnet durch einen vierten Anschluß (D) zum Erfassen eines elektrischen Meßpotentials der ersten Leitschicht (L1), wobei der vierte Anschluß (D) auf derselben Seite der Bezugsebene (E) liegt wie der zweite Anschluß (B).

2. Anordnung nach Anspruch 1, gekennzeichnet durch eine Spannungsversorgungseinrichtung zur Herstellung einer äußeren Potentialdifferenz (δPa) zwischen dem ersten (A) und dem zweiten (B) Anschluß, wobei eine Regeleinheit (R) der Spannungsversorgungseinrichtung ausgebildet ist, eine innere Potentialdifferenz (δPi) zwischen dem ersten (A) und dem dritten (C) Anschluß zu erfassen und die äußere Potentialdifferenz (δPa) in Abhängigkeit von dem erfaßten Wert (δPi) so zu regeln, daß die innere Potentialdifferenz (δPi) einen gegebenen Grenzwert (Umax), bei dem eine irreversible Schädigung des Schichtsystems auftritt, nicht übersteigt und die Regeleinheit (R) ferner ausgebildet ist, eine weitere innere Potentialdifferenz (δPi) zwischen dem zweiten (B) und dem vierten (D) Anschluß zu erfassen und die äußere Potentialdifferenz (δPa) in zusätzlicher Abhängigkeit von diesem erfaßten Wert so zu regeln, daß auch diese innere Potentialdifferenz den Grenzwert (Umax) nicht übersteigt.

3. Anordnung nach einem der Ansprüche 1 bis 2, dadurch gekennzeichnet, daß die Regeleinheit (R) ausgebildet ist, die äußere Potentialdifferenz (δPa) in Abhängigkeit von dem oder den erfaßten Werten (δPi) so zu regeln, daß die innere Potentialdifferenz (δPi) bzw. die inneren Potentialdifferenzen (δPi) nahe dem Grenzwert (Umax) verlaufen.

4. Verfahren zum Anlegen einer elektrischen Betriebsspannung an eine elektrooptischen Schichtsystems mit den Merkmalen der Patentansprüche 1 bis 3, dadurch gekennzeichnet, daß mehrere innere Potentialdifferenzen (δPi) erfaßt werden und die äußere Potentialdifferenz (δPa) in Abhängigkeit von den erfaßten Werten so geregelt wird, daß keine der inneren Potentialdifferenzen (δPi) den Grenzwert (Umax) übersteigt.

## Claims

1. Arrangement having an electro-optic layer system (S), in particular between coated glass surfaces (G1, G2), in which arrangement an optical property of the electro-optic layer system (S) can be changed by applying an operating electric voltage, further having a first electrically conductive conducting layer (L1) on a first surface of the electro-optic layer system (S), and having a second electrically conductive conducting layer (L2) on a second surface, opposite the first surface, of the electro-optic layer system (S), furthermore having a first terminal (A) for applying a first electric potential to the first conducting layer (L1) and having a second terminal (B) for applying a second electric potential to the second conducting layer (L2), the first terminal (A) and the second terminal (B) being arranged on opposite sides of a reference plane (E) perpendicular to the electro-optic layer system (S), in such a way that by applying an external potential difference (δPa) between the first terminal (A) and the second terminal (B) it is possible to form current paths of the same length at right angles to the conducting layers (L1, L2), and having a third terminal (C) for detecting an electric measuring potential of the second conducting layer (L2), the third terminal (C) being on the same side of the reference plane (E) as the first terminal (A), characterized by a fourth terminal (D) for detecting an electric measuring potential of the first conducting layer (L1), the fourth terminal (D) being on the same side of the reference plane (E) as the second terminal (B).

2. Arrangement according to Claim 1, characterized by a power supply device for producing an external potential difference (δPa) between the first terminal (A) and the second terminal (B), a control unit (R) of the power supply device being designed to detect an internal potential difference (δPi) between the first terminal (A) and the third terminal (C) and to control the external potential difference (δPa) as a function of the detected value (δPi) such that the internal potential difference (δPi) does not exceed a given limiting value (Umax) for which irreversible damage of the layer system occurs and, furthermore, the control unit (R) being designed to detect a further internal potential difference (δPi) between the second terminal (B) and the fourth terminal (D) and to control the external potential difference (δPa) additionally as a function of this detected value such that this internal potential difference also does not exceed the limiting value (Umax).

3. Arrangement according to one of Claims 1 and 2, characterized in that the control unit (R) is designed to control the external potential difference (δPa) as a function of the detected value or values (δPi) such that the internal potential difference (δPi) or the internal potential differences (δPi) are near the limiting value (Umax).

4. Method for applying an operating electric voltage to an electro-optic layer system having the features of Patent Claims 1 to 3, characterized in that a plurality of internal potential differences (δPi) are detected and the external potential difference (δPa) is controlled as a function of the detected values such that none of the internal potential differences (δPi) exceeds the limiting value (Umax).

## Revendications

1. Assemblage d'un système électro-optique (S) à couches, notamment entre des surfaces de verre (G1, G2) revêtues d'une couche, assemblage dans lequel une propriété optique du système électro-optique (S) à couches peut être modifiée en appliquant une tension électrique de fonctionnement, en outre avec une première couche électriquement conductrice (L1) sur une première surface du système électro-optique (S) à couches et avec une seconde couche électriquement conductrice (L2) sur une seconde surface du système électro-optique (S) à couches, située en face de la première surface, ensuite avec un premier raccordement (A) pour pouvoir appliquer un premier potentiel électrique à la première couche conductrice (L1) et avec un second raccordement (B) pour pouvoir appliquer un second potentiel électrique à la seconde couche conductrice (L2), où le premier (A) et le second (B) raccordements sont disposés sur des côtés opposés d'un plan de référence (E) perpendiculaire au système électro-optique (S) à couches, de telle sorte que l'application d'une différence de potentiel externe (δPa) entre le premier (A) et le second (B) raccordements permette la propagation de chemins de courant de longueur identique à travers les couches conductrices (L1, L2), et avec un troisième raccordement (C) pour relever un potentiel électrique de mesure de la seconde couche conductrice (L2), où le troisième raccordement (C) se trouve du même côté du plan de référence (E) que le premier raccordement (A), caractérisé par un quatrième raccordement (D) pour relever un potentiel électrique de mesure de la première couche conductrice (L1), où le quatrième raccordement (D) se trouve du même côté du plan de référence (E) que le second raccordement (B).

2. Assemblage selon la revendication 1, caractérisée par une installation d'alimentation en tension pour produire une différence de potentiel externe (δPa) entre le premier (A) et le second (B) raccordements, où une unité de régulation (R) de l'installation d'alimentation en tension est développée pour relever une différence de potentiel interne (δPi) entre le premier (A) et le troisième (C) raccordements et pour réguler la différence de potentiel externe (δPa) en fonction de la valeur relevée (δPi) de sorte que la différence de potentiel interne (δPi) ne dépasse pas une valeur limite définie (Umax) à laquelle apparaît un dommage irréversible du système à couches, et l'unité de régulation (R) est en outre développée pour relever une autre différence de potentiel interne (δPi) entre le second (B) et le quatrième (D) raccordements et pour réguler la différence de potentiel externe (δPa) en plus en fonction de cette valeur relevée de sorte que cette différence de potentiel interne ne dépasse pas non plus la valeur limite (Umax).

3. Assemblage selon l'une quelconque des revendications 1 à 2, caractérisé en ce que l'unité de régulation (R) est développée pour réguler la différence de potentiel externe (δPa) en fonction de la ou des valeurs relevées (δPi) de sorte que la différence de potentiel interne (δPi), respectivement les différences de potentiel interne (δPi), évoluent à proximité de la valeur limite (Umax).

4. Procédé pour appliquer une tension électrique de fonctionnement à un système électro-optique à couches avec les caractéristiques des revendications 1 à 3, caractérisé en ce que plusieurs différences de potentiel interne (δPi) sont relevées et que la différence de potentiel externe (δPa) est régulée en fonction des valeurs relevées de sorte qu'aucune des différences de potentiel interne (δPi) ne dépasse la valeur limite (Umax).
